**Europäisches Patentamt**

**European Patent Office**

**Office européen des brevets**

(11) Veröffentlichungsnummer: **0 000 387**
A1

# (12) EUROPÄISCHE PATENTANMELDUNG

(21) Anmeldenummer: 78100339.7

(22) Anmeldetag: 10.07.78

(51) Int. Cl.²: **B29C17/10, B29D7/22, B29C25/00**

(30) Priorität: 19.07.77 DE 2732501

(43) Veröffentlichungstag der Anmeldung: 24.01.79
Patentblatt 79/2

(84) Benannte Vertragsstaaten: **BE CH DE FR GB LU NL SE**

(71) Anmelder: **Maschinenfabrik DORNBUSCH & Co. KG., Kalanderstrasse 19, D-4150 Krefeld (DE)**

(72) Erfinder: **Mertens, Rudolf, Dipl.-Ing., Berliner Allee 2, D-4152 Kempen 1 (DE)**
**Minkenberg, Rudi, Blumentalstrasse 184, D-4150 Krefeld (DE)**

(74) Vertreter: **Stark, Walter, Dr.-Ing., Moerser Strasse 140, D-4150 Krefeld (DE)**

(54) **Verfahren zum Prägen und Perforieren von thermoplastischen Kunststoffolien.**

(57) Bei einem Verfahren zum Prägen und Perforieren von thermoplastischen Kunststoffolien wird die Folie zunächst erhitzt und dann zwischen einer Präge- (3) und einer Gummiwalze (4) hindurchgeführt. Während des Anliegens an der Prägewalze wird sowohl geprägt als auch perforiert.

Es besteht die Möglichkeit, das Verfahren in zwei sowohl zeitlich als auch auf dem Umfang der Prägewalzen nachgeordneten Arbeitsgängen durchzuführen.

EP 0 000 387 A1

- 1 -

## Verfahren zum Prägen und Perforieren von thermoplastischen Kunststoffolien

Die Erfindung betrifft ein Verfahren zum Prägen und Perforieren von thermoplastischen Kunststoffolien, bei welchem die erhitzte Folie zwischen einer Präge- und einer Gummiwalze hindurchgeführt wird.

Bei den bereits bekannten Verfahren dieser Art wird die aus einem thermoplastischen Material bestehende Kunststoffolie zunächst erhitzt, was eine Reduzierung des Aufwandes während der Bearbeitung zur Folge hat, und anschließend über wenigstens zwei Walzenpaare geführt, welche die Folie prägen und perforieren. Es sind also für die beiden Verfahrensschritte des Prägens und Perforierens jeweils verschiedene, voneinander getrennte Walzenpaare vorgesehen. Das hat zur Folge, daß der Bearbeitungsvorgang relativ viel Zeit in Anspruch nimmt, was gleichzeitig eine Reduzierung der erreichbaren Leistung bedeutet und darüber hinaus die Vorrichtungen zur Durchführung der bereits bekannten Verfahren so aufwendig macht, daß die Anschaffungskosten hierfür recht hoch liegen.

Deshalb hat es sich die Erfindung zur Aufgabe gemacht, das Herstellungsverfahren solcher Folien dahingehend zu verbessern, daß die zur Durchführung erforderlichen Vorrichtungen leistungsfähig und trotzdem einfach in ihrem Aufbau sind.

Als Lösung schlägt die Erfindung vor, die Folie während des Anliegens an der Prägewalze zu prägen und zu perforieren. Auf diese Weise wird der wesentliche Teil des Herstellungsprozesses, der bislang über mehrere Walzen verteilt war, auf eine einzige konzentriert. Die damit erreichbaren Vorteile bestehen in einer zeitlichen Verkürzung des Herstellungsverfahrens und wegen der Reduzierung der Anzahl der erforderlichen Walzen in einer baulichen Vereinfachung der zur Durchführung des erfindungsgemäß vorgeschlagenen Verfahrens erforderlichen Vorrichtung. Das Kernstück dieser Vorrichtung besteht aus der Prägewalze und einer daran anliegenden Gummiwalze, durch die die zu bearbeitende Folie, nachdem sie zuvor erhitzt wurde, geführt wird. Das Erhitzen selbst erfolgt üblicherweise entweder über eine Heiztrommel oder aber über Infrarotstrahler.

Weiter schlägt die Erfindung vor, die Folie zunächst zu prägen und dabei die hochstehenden Teile der Folie vermittels einer Messer- oder Flammeinrichtung zu entfernen. Bei diesem Verfahren erfolgen also Prägung und Perforierung in zwei sowohl zeitlich als auch auf dem Umfang der Prägewalzen nachgeordneten Arbeitsgängen. Selbstverständlich muß die Folie während des Perforierens noch an der Prägewalze anliegen, weshalb es empfehlenswert ist, diese um die Walze herumzuführen. Das Erhitzen der Kunststoffolie kann in der gleichen Weise wie bei den vorher schon angegebenen Verfahren durchgeführt werden. Bei diesem Verfahren ist entscheidend, daß hier das Perforieren über eine Messer- oder Flammeinrichtung erfolgt, welche diejenigen Teile der Folie, die auf den hochstehenden Partien der Prägegravuren aufliegen, ausschneidet oder ausbrennt.

Eine weitere Möglichkeit zum Perforieren der Folie eröffnet die Erfindung durch den Vorschlag, die beim Prägen hochstehenden Teile der Folie durch eine über eine anliegende Heizwalze erhitzte Walze abzunehmen. Die durch die Heizwalze oberflächlich erhitzte Walze berührt während des Anliegens an der Prägewalze lediglich die auf den hochstehenden Partien der Prägegravuren aufliegenden Teile der Folie, die durch die Hitze und den Anpreßdruck der Walze von der Folie abgenommen und durch diese auf die Heizwalze übertragen werden, wo sie durch eine geeignete Rakelvorrichtung entfernt werden. Als zweckmäßig hat es sich erwiesen, die Walze aus Silikon und die Heizwalze aus Stahl herzustellen.

Weiter ist vorgesehen, die Heizwalze oder die Messereinrichtung auf einer Temperatur von 60 - 160°C zu halten, was das Abheben und Abschneiden wesentlich erleichtert.

Da im allgemeinen der auf der Prägewalze aufliegende Teil der Walzen- oder Messereinrichtung eine ebene Kante aufweist, empfiehlt die Erfindung, die hochliegenden Gravurpartien - das sind die Teile der Prägegravuren, auf denen die später abzutragenden Folienteile aufliegen - in einer Ebene anzuordnen. In diesem Fall erweist sich sowohl die Herstellung der Walzen- und Messereinrichtung, also auch die der Prägewalze, als maschinell durchführbar und damit als besonders einfach.

Das Abscheren bestimmter, auf der Prägewalze aufliegender Folienteile gestaltet sich dann besonders problemlos, wenn man, wie die Erfindung vorsieht, die Prägegravur auf der Walze spiralend anordnet.

In der Praxis hat sich gezeigt, daß sich die erhitzte thermoplastische Kunstoffolie während des Prägevorganges recht innig mit der Walzenoberfläche verbindet, so daß nicht immer ein Ablösen ohne Beschädigungen der Folie gewährleistet ist. Deshalb schlägt die Erfindung vor, die Prägewalze selbst auf eine Temperatur von 60 bis 90°C zu halten, was das Ablösen unterstützt und darüber hinaus zur Erwärmung der Folie während des entscheidenden Prägeprozesses beiträgt. Daneben reduziert eine Erwärmung der Prägewalze den erforderlichen Anpreßdruck und damit den konstruktiven Aufwand erheblich

In der Zeichnung sind in schematischer Darstellung Vorrichtungen zur Durchführung der erfindungsgemäßen Verfahren gezeigt. Es zeigen:

Fig. 1 eine Vorrichtung, bei welcher die beim Prägen hochstehenden Teile der Folie durch eine Messereinrichtung abgeschnitten werden;

Fig. 2 eine Vorrichtung, bei der die hochstehenden Teile durch eine Walze ab-

0000387

- 5 -

genommen werden;

Fig. 3 eine Vorrichtung, bei welcher die hochstehenden Teile der Folie durch eine Flammeinrichtung ausgebrannt werden.

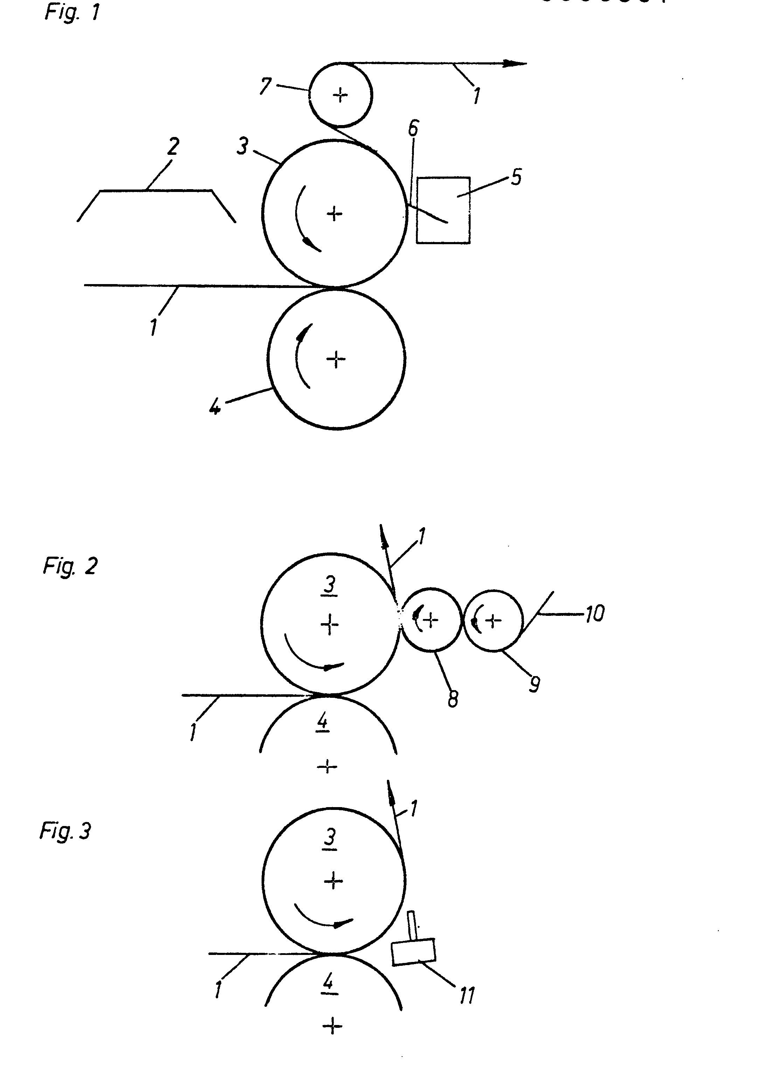

Figur 1 zeigt eine aus thermoplastischem Kunststoff bestehende Folie 1, die zunächst über eine beispielsweise aus einem Infrarotstrahler bestehende Heizvorrichtung 2 flächig erhitzt und anschließend einer Prägewalze 3 und einer Gummiwalze 4 zugeführt wird. Die Prägewalze 3 weist an ihrer Oberfläche eine geeignete Gravur auf, gegen die die erhitzte Kunststoffolie 1 vermittels der Gummiwalze 4 gepreßt wird und ihr durch die Gravur bestimmtes Gepräge erhält. Anschließend liegt die Folie 1 in einem gewissen Bereich am Umfange der Prägewalze 3 an, wo die auf den hochliegenden Gravurpartien aufliegenden Teile der Folie 1 vermittels einer Messereinrichtung 5 durch den Messerbalken 6 abgeschnitten werden. Danach kann die nunmehr geprägte und perforierte Folie 1 beispielsweise über eine Hilfswalze 7 abgenommen und aufgewickelt werden.

Die von der Erfindung vorgeschlagenen Heizeinrichtungen sowohl für Prägewalze 3 als auch für Messereinrichtung 5 sind in der Zeichnung nicht dargestellt.

Bei der in Figur 2 gezeigten Vorrichtung wird die Folie 1 auf die gleiche schon beschriebene Weise geprägt und anschließend, noch während des Anliegens von Folie 1 an Prägewalze 3 die nunmehr hochstehenden Teile der Folie 1 vermittels einer Walze 8 abgenommen. Die in zweckmäßiger Weise aus Silikon bestehende Walze 8 wird durch das Anliegen einer Heizwalze 9, die beispielsweise aus Stahl bestehen kann, oberflächlich erhitzt und nimmt darüber hinaus die auf der Walze 8 befindlichen und von der Folie 1 abgenommenen Teile auf. Von der Heizwalze 9 werden diese dann durch einen Rakelbalken 10 entfernt. Gemäß der in Fig. 2 gezeigten Vorrichtung erfolgt hier also das Abnehmen der beim Prägen hochstehenden Teile der Folie 1 durch Anpressen einer oberflächlich erhitzten Walze 8.

Dieses Abnehmen erfolgt bei der in Fig. 3 gezeigten Vorrichtung über eine Flammeinrichtung 11, die beispielsweise als Gasbrenner ausgebildet sein kann und auf die hochstehenden Teile der Folie 1 - das sind die zu entfernenden Teile der Folie 1 - fokussiert ist. Die Flammeinrichtung 11 übernimmt also hier die Funktion der in Fig. 1 gezeigten Messereinrichtung 5 einschließlich des Messerbalkens 6, so daß das Prägen der Folie 1 bei allen gezeigten Vorrichtungen auf die gleiche Weise erfolgt und lediglich das Perforieren durch unterschiedliche Einrichtungen durchgeführt wird.

Patentansprüche:

1. Verfahren zum Prägen und Perforieren von thermoplastischen Kunststoffolien, bei welchen die erhitzte Folie zwischen einer Präge- und einer Gummiwalze hindurchgeführt wird, dadurch gekennzeichnet, daß die Folie während des Anliegens an der Prägewalze geprägt und perforiert wird.

2. Verfahren nach Anspruch 1, dadurch gekennzeichnet, daß die beim Prägen hochstehenden Teile der Folie durch eine Messereinrichtung abgeschnitten werden.

3. Verfahren nach Anspruch 1, dadurch gekennzeichnet, daß die beim Prägen hochstehenden Teile der Folie durch eine Flammeinrichtung ausgebrannt werden.

4. Verfahren nach Anspruch 1, dadurch gekennzeichnet, daß die beim Prägen hochstehenden Teile der Folie durch eine über eine anliegende Heizwalze erhitzte Walze abgenommen werden.

5. Verfahren nach Anspruch 4, gekennzeichnet durch eine aus Silikon bestehende Walze.

6. Verfahren nach Anspruch 4 oder 5, gekennzeichnet durch eine aus Stahl bestehende Heizwalze.

7. Verfahren nach einem der Ansprüche 4 bis 6, dadurch gekennzeichnet, daß die Heizwalze auf eine Temperatur von 60 - 160°C gehalten

**0000387**

- 2 -

wird.

8. Verfahren nach Anspruch 2, dadurch gekennzeichnet, daß die Messereinrichtung auf eine Temperatur von 60 - 160°C gehalten wird.

9. Verfahren nach einem der Ansprüche 1 bis 8, dadurch gekennzeichnet, daß die hochliegenden Gravurpartien in einer Ebene angeordnet sind.

10. Verfahren nach einem der Ansprüche 1 bis 9, dadurch gekennzeichnet, daß eine Prägewalze mit spiralender Prägegravur eingesetzt wird.

11. Verfahren nach einem der Ansprüche 1 bis 10, dadurch gekennzeichnet, daß die Prägewalze auf eine Temperatur von 60 - 90°C gehalten wird.

Fig. 1

Fig. 2

Fig. 3

**Europäisches Patentamt**

# EUROPÄISCHER RECHERCHENBERICHT

Nummer der Anmeldung

EP 78 10 0339

0000387

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 073 807 (MOBIL OIL) <br><br> * Figuren 1-3; Seite 7, Zeilen 2-20; Seite 8, Zeilen 8-33 * <br><br> -- | 1-11 |
| X | US - A - 3 566 726 (POLITIS) <br><br> * Zusammenfassung * <br><br> -- | 1 |
|  | US - A - 3 471 604 (BUTCHER) <br><br> * Figuren; Ansprüche 1,5 * <br><br> -- | 1 |
|  | FR - A - 1 100 309 (ELLINGHAUSEN) <br><br> * Seite 1,Spalte 2,Zeilen 21-26 * <br><br> -- | 1 |
|  | GB - A - 1 162 977 (ICI) <br><br> * Seite 4, Zeilen 29-45; Ansprüche 1,2,3,11 * <br><br> -- | 1 |
|  | US - A - 3 762 255 (GUERNSEY) <br><br> * Figuren, Zusammenfassung * <br><br> -- | 2 |
|  | FR - A - 1 423 487 (GENERAL TIRE) <br><br> * Figuren, Zusammenfassung $1^{o}$, $2^{o}$ * <br><br> -- ./. | 2 |

**KLASSIFIKATION DER ANMELDUNG (Int.Cl.²)**

B 29 C 17/10
B 29 D 7/22
B 29 C 25/00

**RECHERCHIERTE SACHGEBIETE (Int. Cl.²)**

B 29 C 17/10
B 29 D 7/22
B 29 C 25/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Den Haag | 14-09-1978 | CORDENIER |

| Kategorie | Kennzeichnung des Dokuments mit Angabe, soweit erforderlich, der maßgeblichen Teile | betrifft Anspruch |
|---|---|---|
| | US - A - 3 243 488 (HANNAUER)<br>* Anspruch 3 *<br><br>-- | 11 |
| | US - A - 3 043 071 (SADELL)<br>* Figur 5 *<br><br>-- | 10 |
| | GB - A - 1 085 949 (SMITH & NEPHEW)<br>* Figuren, Ansprüche *<br><br>-- | 3 |
| | GB - A - 1 012 963 (SMITH & NEPHEW)<br>* Figuren *<br><br>-- | 3 |
| A | GB - A - 1 073 605 (SMITH & NEPHEW)<br>* Figuren 1,7-9 *<br><br>-- | 3 |
| A | DE - A - 2 258 513 (ICI)<br>* Seite 26, Zeilen 7-10; Figuren 3,5,7 *<br><br>-- | 2 |
| A | GB - A - 1 162 977 (ICI)<br>* Anspruch 1 *<br><br>-- | 1 |
| A | US - A - 3 054 148 (ZIMMERLI)<br><br>---- | |

**EINSCHLÄGIGE DOKUMENTE**

KLASSIFIKATION DER ANMELDUNG (Int.Cl.²)

RECHERCHIERTE SACHGEBIETE (Int. Cl.²)